# EUROPÄISCHE PATENTANMELDUNG

(11) **EP 2 324 699 A1**
(43) Veröffentlichungstag der Anmeldung: **25.05.2011**
(21) Anmeldenummer: 10450178.8
(22) Anmeldetag: 18.11.2010
(51) Int. Cl.: A01G 13/02

(54) **Pflanzenschutzhülle**

(30) Priorität: 19.11.2009 AT 7312009 U
(71) Anmelder: Witasek, Peter, 9560 Feldkirchen (AT)
(72) Erfinder: Witasek, Peter, 9560 Feldkirchen (AT)
(74) Vertreter: Hehenberger, Reinhard

(57) **Zusammenfassung**

Eine Pflanzenschutzhülle, insbesondere eine Baum- oder Rebschutzhülle, (1) besitzt die Form einer Röhre mit polygonaler, insbesondere quadratischer, Querschnittsform. Am unteren Rand (10) der Pflanzenschutzhülle (1) sind Vorsprünge (11) mit abgeflachten, freien Enden (12) vorgesehen, mit denen die Pflanzenschutzhülle (1) in den Boden gedrückt werden kann.

## Beschreibung

Die Erfindung betrifft eine Pflanzenschutzhülle (auch "Pflanzenschutzsäule"), insbesondere Baum- oder Rebschutzhülle, in Form eines rohrförmigen Körpers, die über eine zu schützende Pflanze, z.B. einen Baum oder eine Weinpflanze, zu stecken ist.

Rebschutzhüllen (auch "Rebschutzsäulen" genannt) sind bekannt, in welchem Zusammenhang auf die AT 005 520 U1, die FR 2 356 361 A und die DE 2 231 875 A verwiesen wird.

Nachteilig bei der bekannten Rebschutzhülle ist es, dass die Spitzen an dem unteren Rand der Rebschutzhülle beim Eindrücken in den Boden leicht verformt werden.

Der Erfindung liegt die Aufgabe zu Grunde, das Eindrücken des als Pflanzenschutzhülle dienenden, rohrförmigen Körpers in den Boden zu erleichtern.

Gelöst wird diese Aufgabe erfindungsgemäß mit einer Pflanzenschutzhülle, welche die Merkmale des Anspruches 1 aufweist.

Bevorzugte und vorteilhafte Ausgestaltungen der erfindungsgemäßen Pflanzenschutzhülle sind Gegenstand der Unteransprüche.

Da die Vorsprünge am unteren Rand der erfindungsgemäßen Pflanzenschutzhülle, insbesondere Baum- oder Rebschutzhülle, als abgeflachte Spitzen ("Bodenkrallen") ausgebildet sind, wird bei Druck von oben das Versenken in das Erdreich erleichtert. Dadurch ist das Festlegen der Pflanzenschutzhülle durch Verankern derselben im Boden einfacher und ohne Gefahr des Verformens (Verbiegens) der in den Boden einzudrückenden Vorsprünge möglich. Diese "Bodenkrallen" ermöglichen durch ihre Bauweise und Form eine bessere Stabilität der erfindungsgemäßen Pflanzenschutzhülle.

Weitere Einzelheiten und Merkmale der erfindungsgemäßen Pflanzenschutzhülle ergeben sich aus der nachstehenden Beschreibung des in den Zeichnungen gezeigten Ausführungsbeispiels einer Pflanzenschutzhülle in Form einer Rebschutzhülle.

Es zeigt:
Fig. 1 einen Zuschnitt für eine Rebschutzhülle ("Rebschutzsäule") und
Fig. 2 die zu einem rohrförmigen Körper gefaltete Rebschutzhülle in Schrägansicht.

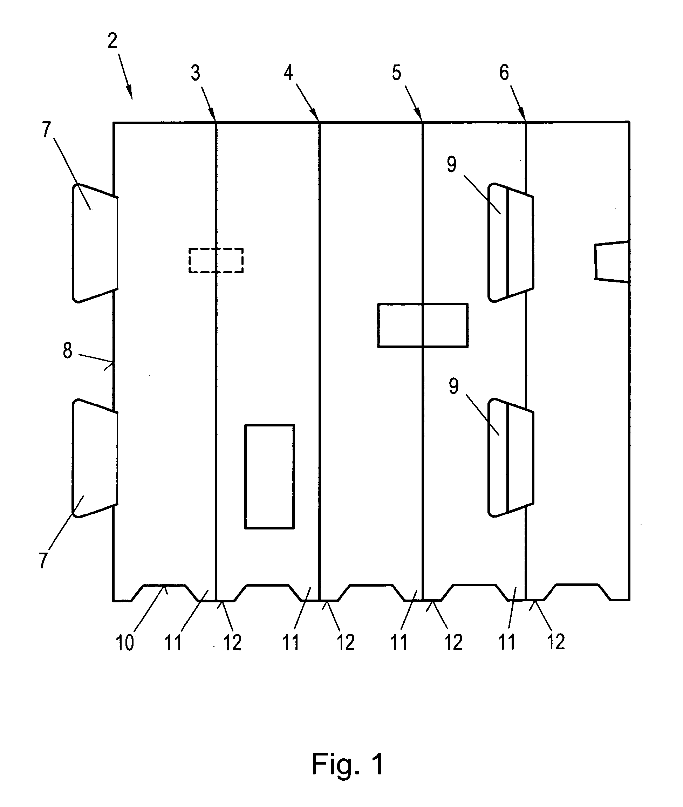

Eine Pflanzenschutzhülle in Form einer Rebschutzhülle 1 besteht aus einem Zuschnitt 2 aus blattförmigem Werkstoff, beispielsweise aus Kunststoff, insbesondere mit zwei Decklagen und zueinander parallelen Querstegen zwischen den Decklagen, wobei die Decklagen über die Querlage miteinander verbunden sind, und dessen Umrissform in Fig. 1 gezeigt ist. Um den Zuschnitt 2 zu einer Rebschutzhülle 1 in Form einer quadratischen Röhre (oder "Säule") zu schließen, wird dieser entlang von vier Kanten 3, 4, 5 und 6 abgewinkelt und zu einer Röhre gebogen, wobei Laschen 7 an dem einen Rand 8 des Zuschnittes 2 in Löcher 9 im Bereich der Kante 6 gesteckt werden, so dass der Zuschnitt 2 in dem zur quadratischen Röhre geformten Zustand gehalten wird.

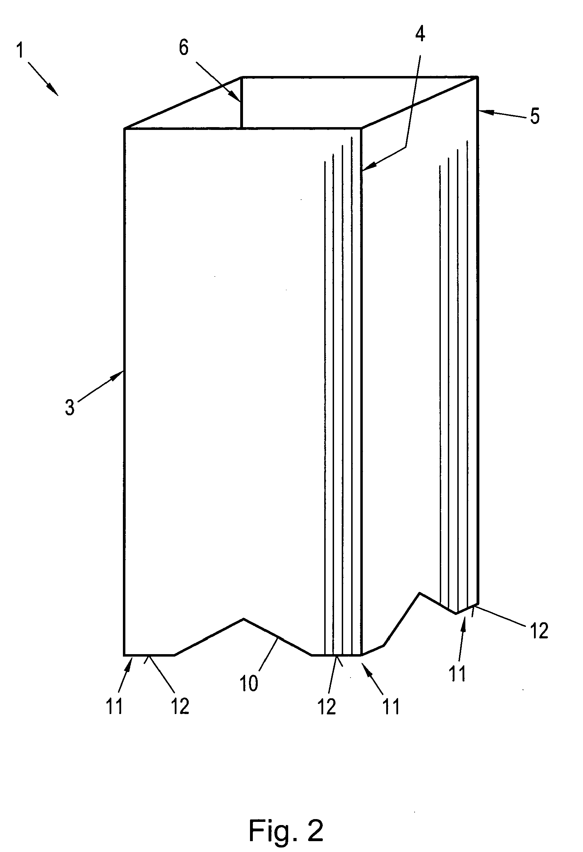

Der in der Gebrauchslage untere Rand 10 des Zuschnittes 2 ist gezackt ausgebildet, so dass sich, wie aus Fig. 2 ersichtlich, im Bereich des unteren Endes der quadratischen Röhre im Bereich jeder Kante 3, 4, 5 und 6 gewinkelte Vorsprünge 11 mit abgeflachten Spitzen ergeben. Beispielsweise haben die Vorsprünge 11 mit abgeflachten, freien Enden 12 ("Bodenkrallen") die Form von gewinkelten Trapezen.

Dadurch, dass am unteren Rand 10 der quadratischen Röhre Vorsprünge 11 mit abgeflachten Spitzen vorgesehen sind, kann die Rebschutzhülle 1 einfach in den Boden rings um eine junge Weinpflanze oder eine andere zu schützende Pflanze eingedrückt werden. So kann ein im Wesentlichen dichter Abschluss am unteren Ende der Rebschutzhülle 1 erreicht werden. Der dichte Abschluss am unteren Ende der Rebschutzhülle ist vorteilhaft, da kein nachteiliger Kamineffekt eintritt. Überdies erlaubt es der dichte Abschluss, dass Unkraut mit (chemischen) Unkrautvernichtungsmitteln bekämpft wird, ohne dass die geschützte Pflanze mit dem Mittel in Berührung kommt und beschädigt wird. Durch die Rebschutzhülle 1 wird, wenn sie aus durchscheinendem und UV-stabilem Polypropylen oder Polyethylen besteht, die Wirkung eines Kleingewächshauses erzielt, so dass ein besseres Wachstum der jungen Weinpflanze gewährleistet ist.

Die erfindungsgemäße Rebschutzhülle 1 schützt die junge Weinpflanze (oder eine andere in ihr aufgenommene Pflanze) auch vor aufgebrachten Herbiziden.

Durch die erfindungsgemäße Rebschutzhülle 1 wird, da sie in den Boden eingedrückt werden kann, ein besserer Schutz und ein sicherer Sitz auch bei mechanischer Unkrautbekämpfung im Bereich der jungen Weinpflanzen erreicht, weil sich die Vorsprünge 11 mit abgeflachten, freien Enden 12 am unteren Ende der Rebschutzhülle 1 im Boden verkrallen und so Zwischenstock-Räumgeräten Widerstand leisten, also dass beim Arbeiten mit Zwischenstock-Räumgeräten ein Verschieben der Rebschutzhülle 1 und damit eine Beschädigung junger Weinpflanzen verhindert ist.

Zusammenfassend kann ein Ausführungsbeispiel der Erfindung wie folgt dargestellt werden:
Eine Pflanzenschutzhülle, insbesondere eine Baum- oder Rebschutzhülle, 1 besitzt die Form einer Röhre mit polygonaler, insbesondere quadratischer, Querschnittsform. Am unteren Rand 10 der Pflanzenschutzhülle 1 sind Vorsprünge 11 mit abgeflachten, freien Enden 12 vorgesehen, mit denen die Pflanzenschutzhülle 1 in den Boden gedrückt werden kann.

## Patentansprüche

1. Pflanzenschutzhülle, insbesondere Baum- oder Rebschutzhülle (1) für Weinpflanzen, vorzugsweise junge Weinpflanzen, in Form einer über die Pflanze zu steckenden Röhre, **dadurch gekennzeichnet, dass** an dem in der Gebrauchslage unteren Ende (10) der Pflanzenschutzhülle (1) abgeflachte Enden (12) aufweisende Vorsprünge (11) vorgesehen sind.

2. Pflanzenschutzhülle nach Anspruch 1, **dadurch gekennzeichnet, dass** sie die Form einer Röhre mit polygonaler, insbesondere quadratischer, Querschnittsform aufweist, und dass die Vorsprünge (11) im Bereich der Kanten (3, 4, 5 und 6) der Pflanzenschutzhülle (1) vorgesehen sind.

3. Pflanzenschutzhülle nach Anspruch 1 oder 2, **dadurch gekennzeichnet, dass** die Pflanzenschutzhülle (1) aus einem zur Röhre gefalteten Zuschnitt (2) aus blattförmigem Werkstoff besteht.

4. Pflanzenschutzhülle nach einem der Ansprüche 1 bis 3, **dadurch gekennzeichnet, dass** die Pflanzenschutzhülle (1) aus durchscheinendem und UV-stabilem Polypropylen oder Polyethylen besteht.

5. Pflanzenschutzhülle nach einem der Ansprüche 1 bis 4, **dadurch gekennzeichnet, dass** die Vorsprünge (11) die Form von Trapezen aufweisen.

6. Pflanzenschutzhülle nach einem der Ansprüche 2 bis 5, **dadurch gekennzeichnet, dass** die Vorsprünge (11) gewinkelt sind.
